Europäisches Patentamt

(19) European Patent Office

Office européen des brevets

(11) Numéro de publication : **0 220 986 B1**

(12) # FASCICULE DE BREVET EUROPEEN

(45) Date de publication du fascicule du brevet :
24.07.91 Bulletin 91/30

(51) Int. Cl.⁵ : **F16C 3/03, B62D 1/18**

(21) Numéro de dépôt : **86402264.5**

(22) Date de dépôt : **10.10.86**

(54) **Arbre de transmission télescopique à rattrapage de jeu angulaire.**

(30) Priorité : 30.10.85 FR 8516138

(43) Date de publication de la demande :
06.05.87 Bulletin 87/19

(45) Mention de la délivrance du brevet :
24.07.91 Bulletin 91/30

(84) Etats contractants désignés :
AT BE CH DE ES GB IT LI LU NL SE

(56) Documents cités :
DE-A- 1 943 790
DE-A- 3 501 132
FR-A- 2 313 593
GB-A- 1 329 456
US-A- 3 383 882

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Barnabe, Jean-Pierre**
**17, Combes Saint Germain**
**F-25700 Valentigney (FR)**
Inventeur : **Hoblingre, André**
**28, rue Vincent d'Indy**
**F-25700 Valentigney (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention concerne un arbre de transmission télescopique à rattrapage de jeu angulaire et, plus particulièrement, un tel arbre de transmission utilisé comme arbre d'une colonne de direction de véhicule réglable en longueur par déplacement axial télescopique.

On connaît des colonnes de direction à réglage par mouvement axial télescopique qui permettent au conducteur d'adapter la position du volant pour améliorer le confort et la sécurité de la conduite. De telles colonnes de direction réglables comportent des éléments correspondants montés coulissants les uns par rapport aux autres. Les arbres de direction de véhicule sont généralement constitués de plusieurs parties successives dans la direction axiale, reliées par des joints universels du type à cardan permettant de transmettre la rotation du volant au boîtier de direction à crémaillère. L'arbre de direction comporte généralement une partie supérieure reliée au volant appelée axe de volant et une partie inférieure appelée axe inférieur. Dans le cas de colonnes de direction télescopiques réglables en longueur, l'une de ces deux parties est réalisée sous la forme d'un arbre de transmission télescopique comportant une partie mâle tubulaire cannelée sur sa surface externe et une partie tubulaire femelle cannelée sur sa surface interne, pour recevoir la partie mâle ; de cette façon, les deux parties de l'arbre engagées l'une sur l'autre sont solidaires en rotation autour de leur axe commun, grâce aux cannelures qui coopèrent les unes avec les autres et libres de se déplacer l'une par rapport à l'autre en translation axiale.

Toutefois, il est nécessaire que la liaison entre les parties mâle et femelle de l'arbre soit exempte de jeu angulaire, sous un couple normal tel que celui mis en jeu pendant la conduite ; une absence de jeu sensible améliore en effet le confort de la conduite. Il est nécessaire également d'obtenir des conditions de frottement très doux pour le coulissement télescopique des deux parties de l'arbre, lors du réglage en longueur de la direction.

On a déjà proposé des dispositifs de rattrapage de jeu angulaire entre les cannelures qui sont constituées par une olive ayant une légère conicité qui est introduite dans l'alésage interne de la partie mâle de l'arbre de transmission, voir par exemple DE-A-3501132. L'expansion radiale de cette olive permet de déformer élastiquement la paroi de la partie tubulaire mâle de l'arbre et d'appliquer ainsi ses cannelures contre les cannelures correspondantes de la partie femelle.

Un tel dispositif de rattrapage de jeu présente cependant l'inconvénient d'accroître le frottement entre les cannelures, lors des déplacements axiaux télescopiques relatifs des deux parties de l'arbre. La mise en place et le réglage du dispositif de rattrapage de jeu compliquent également les opérations nécessaires pour le montage de l'arbre de direction.

On a également proposé (DE-A-1.943.790) un dispositif de rattrapage de jeu pour une colonne de direction dont la longueur est réglable, qui comporte un dispositif de serrage de type mécanique agissant sur la partie femelle de l'arbre de direction qui est séparée en plusieurs secteurs cylindriques par des fentes dans la zone d'emmanchement de la partie mâle. Le dispositif de serrage mécanique qui comporte une bague à surface d'appui tronconique, un ressort de pression et une douille filetée pour régler le serrage est cependant complexe et d'un prix de revient élevé.

De façon plus générale, dans de nombreux cas où l'on utilise un arbre de transmission télescopique comportant deux parties complémentaires cannelées, il peut être nécessaire de prévoir un dispositif de rattrapage de jeu qui soit simple, efficace, facile à monter et qui n'introduise pas de frottement excessif; le rattrapage de jeu peut être nécessaire aussi bien dans le cas où la partie mâle de l'arbre de transmission est réalisée sous forme tubulaire que dans le cas où cette partie mâle est réalisée sous une forme cylindrique pleine.

Le but de l'invention est donc de proposer un arbre de transmission télescopique à rattrapage de jeu angulaire comportant une partie mâle de forme cylindrique pleine ou tubulaire, cannelée sur sa surface externe et une partie tubulaire femelle cannelée sur sa surface interne pour recevoir la partie mâle, de façon que les deux parties de l'arbre engagées l'une sur l'autre soient solidaires en rotation autour de leur axe commun et libres de se déplacer l'une par rapport à l'autre en translation axiale, l'une des deux parties de l'arbre, de forme tubulaire, dont une surface (interne ou externe) est cannelée et l'autre lisse, présentant à son extrémité par laquelle elle vient en engagement avec l'autre partie, au moins deux fentes de direction axiale sur toute son épaisseur délimitant au moins deux secteurs cylindriques déformables dans sa paroi, un élément constitué par une pièce monobloc étant disposé au contact de la surface lisse des secteurs cylindriques déformables, de façon à exercer un effort radial sur ces secteurs tendant à appliquer leurs cannelures sur les cannelures correspondantes de l'autre partie de l'arbre, cet arbre télescopique de construction simple transmettant les mouvements de rotation sans jeu et permettant des déplacements axiaux relatifs de ces parties mâles et femelles à frottement doux.

Dans ce but, la pièce monobloc est réalisée en matériau élastomère, présentant ainsi une élasticité propre, dans au moins une direction radiale, et est montée contre la surface lisse des secteurs déformables, de manière à être précontrainte et à exercer le susdit effort radial sous le seul effet de son élasticité propre et de la précontrainte de montage.

Suivant un premier mode de réalisation de l'invention, la partie mâle de l'arbre, de forme tubulaire, constitue la partie comportant des secteurs cylindriques déformables et l'élément élastique est introduit dans l'alésage interne de cette partie mâle, au niveau des secteurs déformables.

Selon un second mode de réalisation de l'invention, la partie femelle de l'arbre constitue la partie comportant des secteurs cylindriques déformables et l'élément élastique de forme annulaire est disposé autour de la partie femelle de l'arbre, au niveau des secteurs déformables.

Afin de bien faire comprendre l'invention, on va maintenant décrire, à titre d'exemples non limitatifs, en se référant aux figures jointes en annexe, deux modes de réalisation d'un arbre de transmission télescopique suivant l'invention et l'application d'un de ces modes de réalisation à l'axe inférieur et à l'axe de volant d'une colonne de direction réglable en longueur.

Dans ces figures :

– la figure 1 est une vue partielle en perspective éclatée d'un arbre de transmission suivant l'invention et suivant un premier mode de réalisation.

– la figure 2 est une vue partielle en perspective éclatée d'un arbre de transmission suivant l'invention et suivant un second mode de réalisation.

– la figure 3 est une vue latérale avec coupe partielle de l'axe inférieur d'une colonne de direction réglable en longueur, cet axe inférieur étant constitué par un arbre de transmission conforme à l'invention.

– la figure 4 est une vue en coupe de l'axe de volant d'une colonne de direction réglable en longueur, cet axe de volant étant constitué par un arbre de transmission conforme à l'invention.

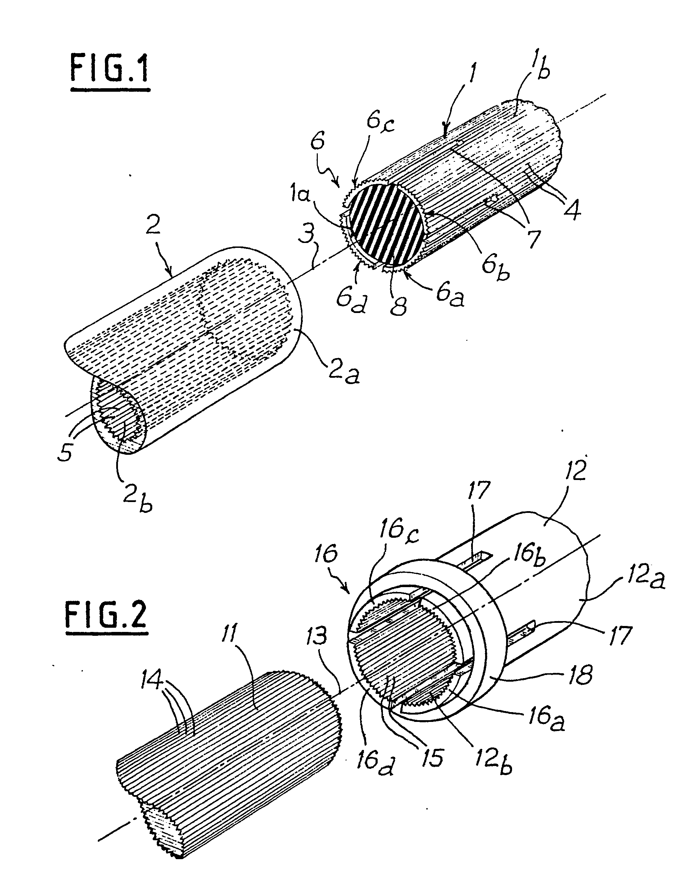

Sur la figure 1, on voit les extrémités destinées à venir en engagement, des deux parties 1 et 2 d'un arbre de transmission. Ces deux parties ont été représentées avec leurs axes confondus suivant la direction 3 de l'axe de l'arbre de transmission.

La partie mâle 1 est constituée par une pièce tubulaire dont la surface interne 1a est lisse et dont la surface externe 1b présente des cannelures longitudinales successives 4.

La partie femelle 2 est constituée par une pièce tubulaire dont la surface externe 2a est lisse et dont la surface interne 2b comporte des cannelures successives longitudinales 5 d'une forme et d'une dimension correspondant aux cannelures 4 de la partie mâle.

La partie mâle 1 comporte à son extrémité destinée à venir en engagement dans la partie femelle au moment du montage de l'arbre quatre fentes 7 traversant toute l'épaisseur de la paroi de la pièce tubulaire 1 et délimitant ainsi quatre secteurs cylindriques 6a, 6b, 6c et 6d.

Une pièce cylindrique 8 en élastomère d'un diamètre nominal légèrement supérieur au diamètre intérieur de la partie tubulaire mâle 1 est engagée à force, à l'extrémité de cette partie mâle 1 comportant les fentes 7. La pièce 8 constituant un élément élastique d'écartement vient en contact, à l'intérieur de l'alésage interne de la pièce 1, avec la surface lisse des secteurs cylindriques 6 et produit ainsi une légère déformation de ces secteurs se traduisant par un léger déplacement radial vers l'extérieur.

Le diamètre externe de la partie mâle est alors légèrement supérieur au diamètre interne de la partie femelle et l'engagement des parties 1 et 2 l'une sur l'autre est effectué en comprimant légèrement la pièce 8 pour permettre l'engagement. La précontrainte de montage de l'élément élastique 8 permet d'obtenir un effet de rattrapage de jeu, cet élément élastique 8 exerçant un effort radial vers l'extérieur sur les secteurs déformables 6a, 6b, 6c et 6d dont les cannelures 4 viennent s'appliquer dans les cannelures 5 de la partie femelle.

On peut ainsi assurer un très bon rattrapage de jeu qui est assuré de façon automatique grâce à l'élasticité de la pièce 8. En choisissant le matériau élastomère constituant la pièce 8 et son diamètre nominal de façon adéquate, on peut d'autre part limiter à une valeur relativement faible le frottement entre les cannelures 4 et 5, lors des déplacements télescopiques de la partie mâle 1 à l'intérieur de la partie femelle 2 de l'arbre. L'élasticité de la pièce 8 permet d'autre part de compenser les défauts ou irrégularités d'usinage éventuels des parties 1 et 2 de l'arbre.

Sur la figure 2, on voit un second mode de réalisation d'un arbre de transmission télescopique à rattrapage de jeu suivant l'invention dans lequel la partie mâle 11 de l'arbre est constitué par un cylindre plein dont la surface externe comporte un jeu de cannelures successives 14. La partie femelle 12 est constituée par une pièce tubulaire comportant un jeu de cannelures 15 sur sa surface interne 12b.

Les parties 11 et 12 de l'arbre de transmission ont été représentées dans leur position permettant l'engagement, ces deux parties ayant leurs axes alignés suivant la direction 13 de l'axe de l'arbre de transmission. La partie femelle 12 comporte quatre fentes 17 traversant sa paroi sur toute son épaisseur, à son extrémité par laquelle elle vient en engagement avec la pièce mâle 11 lors du montage de l'arbre de transmission. Les fentes 17 disposées à 90° autour de la partie femelle 12 délimitent quatre secteurs cylindriques identiques 16a, 16b, 16c et 16d. Un élément annulaire en élastomère 18 est enfilé sur la surface externe lisse 12a de la partie femelle 12, à son extrémité comportant les fentes 17. L'élément élastique annulaire 18 a un diamètre intérieur légèrement inférieur au diamètre extérieur de la partie 12 de l'arbre, si bien qu'au moment du montage, les secteurs déformables 16 sont légèrement déplacés vers l'intérieur et dans des directions radiales de la partie 12.

Au moment de l'engagement de la partie mâle 11 à l'intérieur de la partie femelle 12, l'élément élastique 18 se trouve dilaté radialement et cette précontrainte de montage permet d'exercer sur la surface lisse des secteurs déformables 16 des forces radiales dirigées vers l'intérieur. On obtient ainsi un rattrapage de jeu par application des cannelures 15 sur les cannelures correspondantes 14 de la partie mâle.

Le fonctionnement du dispositif est le même que précédemment et les déplacements télescopiques de l'arbre mâle 11 à l'intérieur de l'arbre femelle 12 s'accompagnent d'un frottement doux.

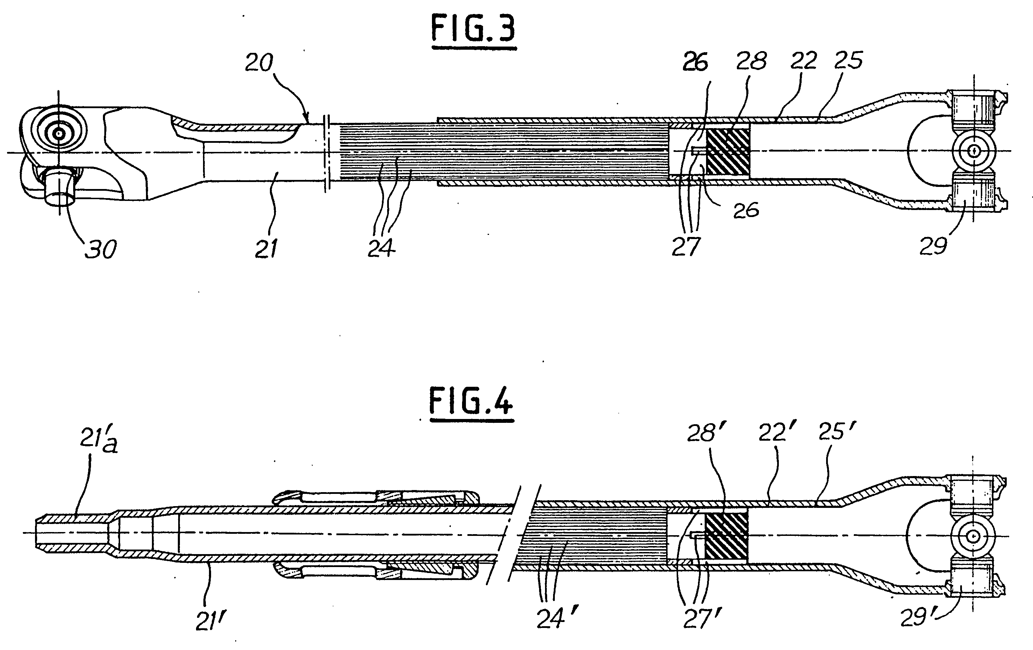

Sur la figure 3, on voit l'axe inférieur 20 d'une colonne de direction constitué sous la forme d'un arbre de transmission télescopique à rattrapage de jeu angulaire tel que décrit en se référant à la figure 1. Cet axe 20 comporte une partie mâle de forme tubulaire 21 et une partie femelle tubulaire 22 dont les extrémités qui ne sont pas engagées l'une sur l'autre portent des articulations respectives 29, 30 permettant de les relier à l'axe supérieur de direction et à la boite de direction à crémaillère, respectivement. La partie mâle 21 comporte des cannelures 24 sur sa surface externe et la partie femelle des canne-lures correspondantes 25 sur sa surface interne. L'extrémité de la partie mâle 21 engagée dans la partie femelle 22 comporte quatre fentes 27 usinées sur toute l'épaisseur de sa paroi et sur une certaine longueur. Les fentes 27 de direction axiale sont disposées à 90° sur la paroi de la partie mâle 21 et délimitent ainsi quatre secteurs déformables identiques 26 dans cette paroi. Une pièce 28 en élastomère d'un diamètre nominal un peu supérieur au diamètre nominal intérieur de la partie mâle 21 est engagée à force dans l'extrémité de celle-ci, au niveau des fentes 27. On obtient ainsi, comme précédemment décrit, un rattrapage de jeu efficace et des déplacements à frottement doux entre les cannelures des parties 21 et 22 de l'arbre pendant son réglage en longueur par déplacement axial relatif des parties 21 et 22.

Sur la figure 4, on a représenté l'axe supérieur ou axe de volant d'une colonne de direction constitué sous la forme d'un arbre de transmission télescopique à rattrapage de jeu angulaire selon l'invention. Les éléments correspondants de l'axe de direction représenté sur la figure 4 et de l'axe inférieur représenté sur la figure 3 portent les mêmes repères affectés cependant de l'exposant ' (prime) sur la figure 4. Une articulation 29' permet de relier l'axe de volant à un axe inférieur. L'extrémité 21'a de la partie mâle 21' de l'axe de volant est prévue pour la fixation du volant (non représenté).

Dans le cas d'une colonne de direction de véhicule, en utilisant un axe de direction à rattrapage de jeu tel que représenté sur la figure 3 ou la figure 4, on a pu obtenir un jeu angulaire maximum de 15 minutes d'arc sous un couple de 0,05 m.daN, l'effort nécessaire pour le réglage axial de l'axe étant limité à 2 daN.

L'invention ne se limite pas aux modes de réalisation qui ont été décrit.

On peut prévoir un nombre de fentes supérieur ou inférieur à quatre pour délimiter un nombre de secteurs déformables lui-même supérieur ou inférieur à quatre sur la partie de l'arbre correspondante. Cependant, il est bien sûr nécessaire de prévoir au moins deux fentes qui, dans ce cas, seront généralement opposées diamétralement pour obtenir une possibilité de déformation radiale de la partie correspondante de l'arbre.

Enfin, l'arbre de transmission suivant l'invention peut être utilisé non seulement pour constituer une partie de l'axe d'une colonne de direction mais encore dans tous les cas où l'on veut transmettre des mouvements de rotation avec une très grande précision, tout en gardant une possibilité de déplacement ou de réglage axial.

## Revendications

1. Arbre de transmission télescopique à rattrapage de jeu angulaire comportant une partie mâle (1, 11, 21) de forme cylindrique pleine ou tubulaire, cannelée sur sa surface externe et une partie tubulaire femelle (2, 12, 22) cannelée sur sa surface interne pour recevoir la partie mâle (1, 11, 21) de façon que les deux parties (1, 11, 21 - 2, 12, 22) de l'arbre engagées l'une sur l'autre soient solidaires en rotation autour de leur axe (3, 13) commun et libres de se déplacer l'une par rapport à l'autre en translation axiale, l'une (1, 12, 21) des deux parties de l'arbre, de forme tubulaire, dont une surface (interne ou externe) est cannelée et l'autre lisse, présentant à son extrémité par laquelle elle vient en engagement avec l'autre partie (2, 11, 22), au moins deux fentes (7, 17, 27) de direction axiale, sur toute son épaisseur délimitant au moins deux secteurs cylindriques déformables (6, 16) dans sa paroi, un élément (8, 18, 28) constitué par une pièce monobloc étant disposé au contact de la surface lisse des secteurs cylindriques déformables (6, 16), de façon à exercer un effort radial sur ces secteurs tendant à appliquer leurs cannelures sur les cannelures correspondantes de l'autre partie de l'arbre, caractérisé par le fait que la pièce monobloc (8, 18, 28) est réalisée en matériau élastomère, présentant ainsi une élasticité propre dans au moins une direction radiale, et par le fait que la pièce monobloc est montée contre la surface lisse des secteurs cylindriques (6, 16), de manière à être précontrainte et à exercer le susdit effort radial sous le seul effet de son élasticité propre et de la précontrainte de montage.

2. Arbre de transmission suivant la revendication 1, caractérisé par le fait que la partie mâle (1, 21) de l'arbre est de forme tubulaire et constitue la partie comportant des secteurs cylindriques déformables (6) et que l'élément élastique (8, 28) est introduit dans l'alésage interne de cette partie mâle (1, 21), au niveau des secteurs déformables (6).

3. Arbre de transmission suivant la revendication 1, caractérisé par le fait que la partie femelle (12) de l'arbre constitue la partie comportant des secteurs cylindriques déformables (16) et que l'élément élastique (18) de forme annulaire est disposé autour de la partie femelle (12) de l'arbre, au niveau des secteurs déformables (16).

4. Arbre de transmission suivant la revendication 1, caractérisé par le fait que la partie (1, 12, 21) de l'arbre constituant les secteurs cylindriques déformables (6, 16) comporte quatre fentes (7, 17, 27) placées à 90° sur la paroi de cette partie (1, 12, 21) de façon à délimiter quatre secteurs cylindriques (6, 16).

5. Arbre de transmission suivant l'une quelconque des revendications 1 à 4, caractérisé par le fait qu'il constitue un tronçon (20) de l'axe d'une colonne de direction de véhicule.

6. Arbre de transmission suivant la revendication 5 constituant le tronçon inférieur de la colonne de direction, caractérisé par le fait que chacune des deux parties (mâle et femelle) (21, 22) de l'arbre (20) porte à son extrémité opposée à celle venant en engagement avec l'autre partie un joint universel du type à cardan (29, 30).

7. Arbre de transmission suivant la revendication 5 constituant le tronçon supérieur de la colonne de direction, caractérisé par le fait que l'une des deux parties (21') de l'arbre porte un volant de direction à son extrémité opposée à celle venant en engagement avec l'autre partie (22') de l'arbre et que cette autre partie (22') porte un joint universel (29') à son extrémité opposée à celle venant en engagement avec la première partie (21') de l'arbre.

## Patentansprüche

1. Teleskopwelle mit Winkelspielausgleich, bestehend aus einem vollen oder rohrförmigen, auf seiner Außenfläche geriffelten Einsteckteil (1, 11, 21) zylindrischer Form und einem rohrförmigen, auf seiner Innenfläche geriffelten Aufnahmeteil (2, 12, 22) zur Aufnahme des Einsteckteils (1, 11, 21), so daß die beiden ineinandergesteckten Teile (1, 11, 21 - 2, 12, 22) der Welle bezüglich Drehung um ihre gemeinsame Achse (3, 13) miteinander fest verbunden sind und sich in axialer Richtung gegeneinander frei bewegen können, wobei einer (1, 12, 21) der beiden Teile der Welle, der rohrförmig ist und dessen Innen- oder Außenfläche geriffelt ist, während die andere Fläche glatt ist, an seinem Ende, mit dem er mit dem anderen Teil (2, 11, 22) in Eingriff kommt, in seiner ganzen Wanddicke mindestens zwei axial gerichtete Schlitze (7, 17, 27) aufweist, die in seiner Wand mindestens zwei verformbare Zylindersektoren (6, 16) abgrenzen, und ein aus einem einstückigen Teil bestehendes Element (8, 18, 28) in Kontakt mit der glatten Fläche der verformbaren Zylindersektoren (6, 16) angeordnet ist, so daß es auf diese Sektoren eine radiale Kraft ausübt, die bestrebt ist, deren Riffelung an die entsprechende Riffelung des anderen Teils der Welle anzudrücken, dadurch gekennzeichnet, daß das einstückige Teil (8, 18, 28) aus einem Elastomermaterial besteht und somit mindestens in einer radialen Richtung eine Eigenelastizität besitzt und daß das einstückige Teil an die glatte Fläche der Zylindersektoren (6, 16) angedrückt montiert ist, so daß es vorgespannt ist und die radiale Kraft nur durch Wirkung seiner Eigenelastizität und der Montagevorspannung ausübt.

2. Welle nach Anspruch 1, dadurch gekennzeichnet, daß der Einsteckteil (1, 21) der Welle rohrförmig ist und den die verformbaren Zylindersektoren (6) aufweisenden Teil bildet und daß das elastische Element (8, 28) in Höhe der verformbaren Sektoren (6) in die Bohrung im Inneren des Einsteckteils (1, 21) eingeführt ist.

3. Welle nach Anspruch 1, dadurch gekennzeichnet, daß der Aufnahmeteil (12) der Welle den die verformbaren Zylindersektoren (16) aufweisenden Teil bildet und daß das ringförmige elastische Element (18) in Höhe der verformbaren Sektoren (16) auf den Aufnahmeteil (12) der Welle aufgesetzt ist.

4. Welle nach Anspruch 1, dadurch gekennzeichnet, daß der Teil (1, 12, 21) der Welle, der die verformbaren Zylindersektoren (6, 16) bildet, vier Schlitze (7, 17, 27) aufweist, die in der Wand dieses Teils (1, 12, 21) in Abständen von 90° vorgesehen sind, so daß vier Zylindersektoren (6, 16) abgegrenzt werden.

5. Welle nach einem der Ansprüche 1 bis 4, dadurch gekennzeichnet, daß sie einen Abschnitt (20) der Achse einer Fahrzeuglenksäule bildet.

6. Welle nach Anspruch 5, die den unteren Abschnitt der Lenksäule bildet, dadurch gekennzeichnet, daß der Einsteckteil und der Aufnahmeteil (21, 22) der Welle (20) jeweils an seinem Ende, das dem mit dem anderen Teil in Eingriff kommenden Ende entgegengesetzt ist, ein Kardangelenk (29, 30) tragen.

7. Welle nach Anspruch 5, die den oberen Abschnitt der Lenksäule bildet, dadurch gekennzeichnet, daß einer der beiden Teile (21') der Welle an dem Ende, das dem mit dem anderen Teil (22') der Welle in Eingriff kommenden Ende entgegengesetzt ist, ein Lenkrad trägt und daß der andere Teil (22') an dem Ende, das dem mit dem ersten Teil (21') der Welle in Eingriff kommenden Ende entgegengesetzt ist, ein Kardangelenk (29') trägt.

## Claims

1. Telescopic transmission shaft capable of taking up angular play, comprising a male part (1, 11, 21) of solid or tubular cylindrical form, splined on its outer surface and a female tubular part (2, 12, 22) splined on its internal surface for the purpose of receiving the male part (1, 11, 21) in a manner such that the two interengaged parts (1, 11, 21 - 2, 12, 22) of the shaft are integral in rotation about their common axis (3, 13) and free to move relative to each other in axial translation, one (1, 12, 21) of the two parts of the shaft, of tubular form, of which one surface (inner or outer) is splined and the other is smooth, having at its end by which it comes into engagement with the other part (2, 11, 22) at least two axially extending slots (7, 17, 27) throughout its entire thickness delimiting at least two deformable cylindrical sectors (6, 16) in its wall, an element (8, 18, 28) formed by a monobloc piece being disposed in contact with the smooth surface of the deformable cylindrical sectors (6, 16) so as to exert a radial force on these sectors which tends to apply their splines to the corresponding splines of the other part of the shaft, characterised in that the monobloc piece (8, 18, 28) is made of an elastomeric material, thus having an inherent elasticity in at least one radial direction, and in that the monobloc piece is mounted against the smooth surface of the cylindrical sectors (6, 16) in such a way as to be prestressed and to exert the abovementioned radial force solely under the effect of its inherent elasticity and of the prestressing during assembly.

2. Transmission shaft according to Claim 1, characterised in that the male part (1, 21) of the shaft is of tubular form and constitutes the part having deformable cylindrical sectors (6) and in that the elastic element (8, 28) is introduced into the inner bore of this male part (1, 21) in the region of the deformable sectors (6).

3. Transmission shaft according to Claim 1, characterised in that the female part (12) of the shaft constitutes the part having deformable cylindrical sectors (16) and in that the elastic element (18), of annular form, is disposed around the female part (12) of the shaft in the region of the deformable sectors (16).

4. Transmission shaft according to Claim 1, characterised in that the part (1, 12, 21) of the shaft constituting the deformable cylindrical sectors (6, 16) has four slots (7, 17, 27) placed at 90° on the wall of this part (1, 12, 21) in such a way as to define four cylindrical sectors (6, 16).

5. Transmission shaft according to any one of Claims 1 to 4, characterised in that it constitutes a section (20) of the shaft of a vehicle steering column.

6. Transmission shaft according to Claim 5, constituting the lower section of the steering column, characterised in that each of the two parts (male and female) (21, 22) of the shaft (20) carries at its end opposite that coming into engagement with the other part a universal joint of the cardan type (29, 30).

7. Transmission shaft according to Claim 5, constituting the upper section of the steering column, characterised in that one of the two parts (21') of the shaft carries a steering wheel at its end opposite that coming into engagement with the other part (22') of the shaft and in that this other part (22') carries a universal joint (29') at its end opposite that coming into engagement with the first part (21') of the shaft.

# FIG.1

# FIG.2

7

## FIG.3

20 26 28 22 25

30 21 24 27 26 29

## FIG.4

21'a 28' 22' 25'

21' 24' 27' 29'

EP 0 220 986 B1